# EUROPÄISCHE PATENTANMELDUNG

(11) **EP 4 059 645 A1**
(43) Veröffentlichungstag der Anmeldung: **21.09.2022**
(21) Anmeldenummer: 21163655.0
(22) Anmeldetag: 19.03.2021
(51) Int. Cl.: B23D 57/00

(54) **SEILSÄGE UND SYSTEM UMFASSEND EINE SEILSÄGE UND EINE FERNBEDIENUNG, SOWIE VERFAHREN UND VERWENDUNG EINER BETÄTIGUNGSVORRICHTUNG ZUR STRAFFUNG EINES SÄGESEILS IN EINER SEILSÄGE**

(71) Anmelder: Hilti Aktiengesellschaft, 9494 Schaan (LI)
(72) Erfinder: Rieger, Hans-Joerg, 6712 Thueringen (AT); Plattner, David, 6200 Gallzein (AT)
(74) Vertreter: Hilti Aktiengesellschaft Corporate Intellectual Property

(57) **Zusammenfassung**

Die vorliegende Erfindung betrifft eine Seilsäge (1) mit einem Seilantrieb (2) und einem Seilspeicher (3) für ein Sägeseil (4), bei der eine Betätigungsvorrichtung zur Straffung des Sägeseils an einer Antriebs- und Speichereinheit (5) der Seilsäge angeordnet vorliegt. In einem zweiten Aspekt betrifft die Erfindung ein System aus einer Seilsäge und einer Fernbedienungsvorrichtung (3), wobei die Betätigungsvorrichtung (6) Bestandteil der Fernbedienungsvorrichtung ist. In weiteren Aspekten betrifft die Erfindung ein Verfahren, sowie eine Verwendung einer Betätigungsvorrichtung zur Straffung eines Sägeseils in einer Seilsäge, wobei die Betätigungsvorrichtung an einer Antriebs- und Speichereinheit der Seilsäge angeordnet vorliegt oder Bestandteil einer Fernbedienungsvorrichtung ist.

## Beschreibung

Die vorliegende Erfindung betrifft eine Seilsäge mit einem Seilantrieb und einem Seilspeicher für ein Sägeseil, bei der eine Betätigungsvorrichtung zur Straffung des Sägeseils an einer Antriebs- und Speichereinheit der Seilsäge angeordnet vorliegt. In einem zweiten Aspekt betrifft die Erfindung ein System aus einer Seilsäge und einer Fernbedienungsvorrichtung, wobei die Betätigungsvorrichtung Bestandteil der Fernbedienungsvorrichtung ist. In weiteren Aspekten betrifft die Erfindung ein Verfahren, sowie eine Verwendung einer Betätigungsvorrichtung zur Straffung eines Sägeseils in einer Seilsäge, wobei die Betätigungsvorrichtung an einer Antriebs- und Speichereinheit der Seilsäge angeordnet vorliegt oder Bestandteil einer Fernbedienungsvorrichtung ist.

### Hintergrund der Erfindung:

Im Stand der Technik sind sogenannte Seilsägen bekannt, mit denen große Schnitte, beispielsweise in Wände, eingebracht werden können. Seilsägen verfügen üblicherweise über ein als Endlos-Sägeseil ausgebildetes Sägeseil, das im Inneren der Seilsäge über verschiedene Rollen geführt und gespannt wird. Zumindest ein Teil dieser Rollen bilden einen Seilspeicher, in dem das Sägeseil gespeichert werden kann. Ferner kann ein Spann- und Spreizmechanismus vorgesehen sein, mit dem das Sägeseil straff gehalten wird. Das Sägeseil ist im Laufe seiner Benutzung großen mechanischen Belastungen ausgesetzt, wobei insbesondere eine gleichmäßige Abnutzung des Sägeseils angestrebt wird. Dadurch kann beispielsweise die Wahrscheinlichkeit bzw. das Risiko für ein unerwünschtes Zerreißen des Sägeseils reduziert werden. Die Rollen bzw. Umlenkrollen des Seilspeichers der Seilsäge weisen Führungsnuten als Laufrillen auf, wobei das Sägeseil vorzugsweise in diesen Laufrillen geführt wird. Der Seilantrieb, sowie der Seilspeicher können von einem Gehäuse umgeben sein, wobei dadurch eine Antriebs- und Speichereinheit der Seilsäge gebildet wird.

Damit sich das Sägeseil möglichst rund, d.h. gleichmäßig, abnutzt, ist es im Stand der Technik bekannt, das Sägeseil vor dem Verbinden der Seilschlaufe einzudrehen. Durch dieses Eindrehen des Sägeseils wird eine Schlaufen- bzw. Schleifenbildung des Sägeseils befördert, wobei diese Schlaufen- bzw. Schleifenbildung dazu führt, dass das Sägeseil nicht ohne zusätzliche Straffung in den Führungsnuten der Seilrollen gehalten werden kann.

Bei konventionellen Seilsägen, wie sie aus dem Stand der Technik bekannt sind, sind Betätigungsvorrichtungen vorgesehen, mit denen eine Straffung des Sägeseils bewirkt bzw. initiiert werden kann. Diese Betätigungsvorrichtungen können beispielsweise von einem Taster gebildet werden oder einen Taster umfassen. In der Regel sind die bekannten Betätigungsvorrichtungen zur Seilstraffung an einem Steuerpult angeordnet, das sich aus Sicherheitsgründen beispielsweise mehrere Meter von der eigentlichen Seilsäge entfernt befindet. Das bedeutet, dass bekannte Betätigungsvorrichtungen zur Seilstraffung nicht direkt an der Antriebs- und Speichereinheit der Seilsäge angeordnet vorliegen, sondern üblicherweise Bestandteil eines Steuerpults sind, welches zumeist mehrere Meter von der Seilsäge entfernt aufgestellt ist. Aus diesem Abstand ergibt sich, dass zum Belegen des Seilspeichers mindestens zwei Personen erforderlich sind, nämlich eine erste Person, die an der Antriebs- und Speichereinheit der Seilsäge das Seil strafft und eine zweite Person, die an dem Steuerpult die Betätigungsvorrichtung zum Straffen des Sägeseils betätigt.

Das beschriebene Vorgehen zur Vorbereitung der Seilsäge für deren Betrieb ist sehr personal- und damit kostenaufwändig. Die Aufgabe, die der vorliegenden Erfindung somit zugrunde liegt, besteht darin, die vorstehend beschriebenen Mängel und Nachteile des Standes der Technik zu überwinden und eine Seilsäge bereitzustellen, die mit weniger Personalaufwand betrieben werden kann. Insbesondere soll die Vorbereitung der Seilsäge für ihren Betrieb vereinfacht werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Seilsäge mit einem Seilantrieb und einem Seilspeicher für ein Sägeseil vorgesehen. Die Seilsäge ist dadurch gekennzeichnet, dass eine Betätigungsvorrichtung zur Straffung des Sägeseils an der Antriebs- und Speichereinheit der Seilsäge angeordnet vorliegt («erste Ausgestaltung der Erfindung»). Das bedeutet im Sinne der Erfindung bevorzugt, dass die Betätigungsvorrichtung zur Straffung des Sägeseils nicht an einem bevorzugt stationär aufgestellten Steuerpult vorgesehen ist, sondern vielmehr Bestandteil der Seilsäge selbst ist. Solche bevorzugt stationär aufgestellten Steuerpulte sind im Stand der Technik bekannt und werden zur Steuerung von Seilsägen verwendet. Von solchen Seilsägesystemen mit Stehpult wendet sich die Erfindung gerade ab. Dies wird insbesondere dadurch erreicht, dass die Betätigungsvorrichtung zur Seilbelegung an der Antriebs- und Speichereinheit der Seilsäge angeordnet vorliegt. Dadurch kann der besondere Vorteil der Erfindung erreicht werden, dass zur Belegung des Seilspeichers des Seilsäge nur noch eine Person erforderlich ist, wodurch der Personalaufwand zum Betrieb der Seilsäge erheblich reduziert werden kann. Die eine Person kann im Bereich der Seilsäge zum Einlegen des Sägeseils das Sägeseil straff halten und vorzugsweise gleichzeitig die Betätigungsvorrichtung zur Straffung des Sägeseils betätigen, da diese vorteilhafterweise an der Antriebs- und Speichereinheit der Seilsäge angeordnet vorliegt.

Mit der Erfindung kann vorteilhafterweise erreicht werden, dass die Seilsäge mit deutlich weniger Personalaufwand betrieben werden kann. Insbesondere kann mit der Erfindung die Vorbereitung der Seilsäge für ihren Betrieb erheblich einfacher und weniger personalaufwändig gestaltet werden, indem die Belegung des Seilspeichers vereinfacht wird.

Dieselbe vorteilhafte Wirkung, dass nur eine Person zur Vorbereitung der Seilsäge für deren Betrieb erforderlich ist, kann dadurch erreicht werden, dass die Betätigungsvorrichtung Bestandteil einer Fernbedienungsvorrichtung ist («zweite bevorzugte Ausgestaltung der Erfindung»). In diesem Fall kann die eine Person das Sägeseil in den Seilspeicher der Seilsäge einlegen und vorzugsweise gleichzeitig ein Betätigungselement der Betätigungsvorrichtung für die Straffung des Sägeseils betätigen. Dadurch wird das Sägeseil gestrafft und für die Vorbereitung der Seilsäge für deren Benutzung ist lediglich eine Person erforderlich. Beiden Ausgestaltungen der Erfindung ist gemein, dass die Betätigungsvorrichtung nicht an einem stationär aufgestellten Steuerpult angeordnet vorliegt. Somit betrifft die Erfindung insbesondere ein Seilsäge, bei der eine Betätigungsvorrichtung nicht an einem stationär aufgestellten Steuerpult angeordnet vorliegt, wobei dieses Steuerpult üblicherweise einige Meter von der Seilsäge beabstandet vorliegt. Bei der ersten Ausgestaltung der Erfindung kann zur Aktivierung der Seilspannung zur Speicherbelegung die Kommunikationsverbindung, d.h. die Funkstrecke, deaktiviert sein, wodurch ein ungewollter Wiederanlauf der Seilsäge effektiv verhindert wird. Im Kontext der zweiten bevorzugten Ausgestaltung der Erfindung ist eine aktive Funkstrecke vorgesehen, so dass es erforderlich ist, ein unbeabsichtigtes Einschalten oder auch ein unbeabsichtigtes Wiederanlaufen über zusätzliche Massnahmen zu verhindern.

Bei der vorgeschlagenen Betätigungsvorrichtung handelt es sich insbesondere um eine Betätigungsvorrichtung, die für die Seilbelegung verwendet wird. Es können im Kontext der vorgeschlagenen Seilsäge auch andere Betätigungsvorrichtungen mit abweichender Funktionalität vorgesehen sein, dass das die vorgeschlagene Betätigungsvorrichtung im Sinne der Erfindung bevorzugt auch als «weitere Betätigungsvorrichtung» bezeichnet wird.

Es ist im Sine der Erfindung bevorzugt, dass das vorgeschlagene System mindestens zwei Betätigungsvorrichtungen aufweist, wobei eine erste Betätigungsvorrichtung an der Antriebs- und Speichereinheit der Seilsäge vorgesehen sein kann und eine zweite Betätigungsvorrichtung an einer Fernbedienungsvorrichtung. Vorzugsweise kann durch eine Betätigung der Betätigungsvorrichtungen die Zugkraft des Sägeseils eingestellt bzw. verändert werden. Es ist im Sine der Erfindung bevorzugt, dass die Betätigungsvorrichtung an der Antriebs- und Speichereinheit der Seilsäge insbesondere zur Seilbelegung bzw. zur Belegung des Speichers verwendet wird. Es ist im Sinne der Erfindung bevorzugt, dass während der Belegung des Speichers der Seilsäge keine Kommunikationsverbindung zwischen der Seilsäge und der Fernbedienungsvorrichtung besteht. Mit anderen Worten ist es im Sinne der Erfindung bevorzugt, dass die Fernbedienungsvorrichtung während der Seilbelegung deaktiviert ist. Während des Betriebs der Seilsäge hält sich der Nutzer des Systems vorzugsweise außerhalb eines Gefahrenbereichs der Seilsäge auf und kann diese während ihres Betriebs mit der Fernbedienungsvorrichtung steuern. Der Nutzer kann insbesondere einen Druck auf die Betätigungsvorrichtung verändern bzw. anpassen. Dies kann während des Betriebs der Seilsäge bequem und sicher unter Verwendung der Fernbedienungsvorrichtung und außerhalb des Gefahrenbereichs der Seilsäge erfolgen. Insbesondere kann für diese Anpassung des Drucks die Betätigungsvorrichtung an der Fernbedienung verwendet werden.

Im Kontext der Erfindung wird somit eine Seilsäge offenbart, bei der die weitere Betätigungsvorrichtung entweder an einer Antriebs- und Speichereinheit der Seilsäge selbst angeordnet vorliegt oder Bestandteil einer Fernbedienungsvorrichtung ist.

Es ist im Sinne der Erfindung bevorzugt, dass die Betätigungsvorrichtung dazu vorgesehen ist, eine Spannung des Sägeseils einzustellen. Mit anderen Worten entspricht die Straffung des Sägeseils der Einstellung einer vorzugsweise erhöhten Seilspannung bzw. einem hohen Wert der Seilspannung. Wenn die Spannung des Sägeseils reduziert oder aufgehoben werden soll, kann beispielsweise ein niedrigerer Wert für die Spannung des Sägeseils eingestellt werden. Es ist im Sinne der Erfindung bevorzugt, dass ein hoher Wert für die Spannung des Sägeseils einem Spannungszustand des Sägeseils entspricht, während ein niedriger Wert für die Spannung des Sägeseils einem Entspannungszustand des Sägeseils entspricht. Es ist im Sinne der Erfindung bevorzugt, dass eine Spannung des Sägeseils bzw. ein Wert für die Seilspannung mittels der Betätigungsvorrichtung eingestellt werden kann.

Es ist im Sinne der Erfindung bevorzugt, dass ein Öffnen der Schutzabdeckung eine Absenkung der Spannkraft des Sägeseils bewirkt. Durch die Absenkung der Seil-Spannkraft kann vorteilhafterweise erreicht werden, dass die Verletzungsgefahr für den Bediener der Seilsäge erheblich reduziert werden kann. Die verbleibende Seil-Spannkraft ist aber vorzugsweise weiter so hoch, dass das Sägeseil sicher in den Führungsnuten der Rollen des Seilspeichers verbleibt.

Es ist im Sinne der Erfindung bevorzugt, dass durch eine lange Betätigung der Betätigungsvorrichtung die Spannung des Sägeseils aufgehoben wird. Das bedeutet mit anderen Worten bevorzugt, dass das Sägeseil vorzugsweise nicht mehr unter Spannung steht.

Vorzugsweise kann durch eine längere Betätigung der Betätigungsvorrichtung die Seilsäge in einen Zustand gebracht werden, in dem eine Belegung des Seilspeichers möglich ist. Dieser Zustand der Speicher-Belegung kann vorzugsweise dadurch erreicht werden, dass der Speicher zusammenfährt. Das bedeutet im Sinne der Erfindung bevorzugt, dass ein Abstand zwischen den Rollen des Seilspeichers geringer wird, indem die Rollen aufeinander zu bewegt werden. Dieser Vorgang erfolgt vorzugsweise langsam und mit geringer Kraft. Eine kurze Betätigung der Betätigungsvorrichtung kann dazu führen, dass der Speicher wieder auseinanderfährt. Das bedeutet im Sinne der Erfindung bevorzugt, dass ein Abstand zwischen den Rollen des Seilspeichers erhöht wird, indem die Rollen voneinander wegbewegt werden. Mit anderen Worten entfernen sich die Rollen des Seilspeichers voneinander bzw. sie werden auseinandergezogen. Durch dieses Auseinanderziehen des Seilspeichers bzw. der Rollen des Seilspeichers kann die Seilschlaufe des Sägeseils gestrafft werden. Die Seilschlaufe kann insbesondere soweit gestrafft werden, bis das Sägeseil wieder sicher in den Führungsnuten der Rollen gehalten wird. Es ist somit im Sinne der Erfindung bevorzugt, dass ein kurzes, nochmaliges Betätigen der Betätigungsvorrichtung zu einer Straffung des Sägeseils führt, wobei die Straffung des Sägeseils insbesondere dazu führt, dass das Sägeseil in die Führungsnuten des Seilspeichers gelangt.

Es ist im Sinne der Erfindung bevorzugt, dass nach dem Schliessen der Schutzabdeckung die Seilspannung wiedererhöht wird. Diese Erhöhung der Seilspannung nach Schließen der Abdeckung kann beispielsweise in einem Bereich von 5 bis 20 % der Ausgangsspannung des Sägeseils liegen. Es ist im Sinne der Erfindung bevorzugt, dass die Seilspannung einen bevorzugt vorgegebenen Mindestwert nicht unterschreitet.

Diese erhöhte Seilspannung ermöglicht es vorteilhafterweise, eine Flucht der Führungsrollen am Maschineneingang und/oder am Maschinenausgang zu den am Bauteil angebrachten Umlenkrollen zu kontrollieren. Mit anderen Worten für ein Schließen der Abdeckung der Antriebs- und Speichereinheit der Seilsäge zu einer automatischen Erhöhung der Spannung des Sägeseils. Es ist im Sinne der Erfindung insbesondere bevorzugt, dass eine Betätigung der Betätigungsvorrichtung mit fest vorgegebenen Werten für eine Spannkraft und/oder Lösekraft des Sägeseils korreliert, um Fehlanwendungen zu vermeiden. Der Zusammenhang zwischen der Betätigung der Betätigungsvorrichtung und den vorzugsweise fest vorgegebenen Spannkräften und/oder den vorzugsweise fest vorgegebenen Lösekräften des Sägeseils besteht insbesondere darin, dass eine Betätigung der Betätigungsvorrichtung zu einer Anwendung der vorzugsweise fest vorgegebenen Spann- und/oder Lösekräften führt.

Es ist im Sinne der Erfindung bevorzugt, eine Spannung des Sägeseils der Seilsäge bei geöffneter Abdeckung der Seilsäge nicht verändert werden kann. Mit anderen Worten ist die Seilsäge vorzugsweise so eingerichtet, dass die Spannung auf dem Sägeseil von einem Bediener nicht weiter erhöht werden kann, wenn die Abdeckung der Antriebs- und Speichereinheit der Seilsäge geöffnet ist.

Es ist im Sinne der Erfindung bevorzugt, dass die Seilsäge eine Abdeckung für den Seilspeicher aufweist, wobei bei Öffnen der Abdeckung eine vordefinierte, bevorzugt niedrige, Seilspannung einstellbar ist. Es ist im Sinne der Erfindung bevorzugt, dass die Einstellung der Seilspannung automatisch erfolgt, wobei im Kontext der vorliegenden Erfindung insbesondere eine niedrige Seilspannung eingestellt wird, wenn die Abdeckung des Seilspeichers geöffnet wird. Diese Einstellung erfolgt vorzugsweise automatisch, wenn die Seilsäge erkennt, dass die Seilspeicher-Abdeckung geöffnet wird. Durch die Einstellung eines vorzugsweise vorgegebenen oder vordefinierten niedrigen Werts für die Seilspannung kann vorteilhafterweise ein Verletzungsrisiko für einen Nutzer der Seilsäge erheblich reduziert werden. Dies ist insbesondere dann der Fall, wenn der Nutzer oder Bediener mit einer Hand zwischen eine Rolle des Seilspeichers und dem Sägeseil gerät. Es ist in dieser Ausgestaltung der Erfindung bevorzugt, dass der Spanndruck auf das Sägeseil beim Öffnen der Speicherabdeckung bevorzugt automatisch auf einen vordefinierten, niedrigen Wert eingestellt wird. Auf diese Weise kann die Verletzungsgefahr für den Bediener der Seilsäge wesentlich verringert werden.

Es ist alternativ oder ergänzend bevorzugt, dass bei Schließen der Abdeckung des Seilspeichers eine hohe Seilspannung eingestellt werden kann. Auch diese Einstellung erfolgt vorzugsweise automatisch bei Erkennen, dass die Seilspeicher-Abdeckung geschlossen wird. Es ist im Sinne der Erfindung bevorzugt, dass die Seilspannung beim Schließen der Abdeckung des Seilspeichers bevorzugt automatisch angehoben wird. Dadurch kann vorteilhafterweise erreicht werden, dass das Sägeseil gestrafft und eine korrekte Seilführung kontrolliert bzw. überwacht werden kann.

In einem zweiten Aspekt betrifft die Erfindung ein System umfassend eine Seilsäge und eine Fernbedienungsvorrichtung, wobei die Betätigungsvorrichtung Bestandteil der Fernbedienungsvorrichtung ist. Im Stand der Technik sind Seilsägesysteme bekannt, bei denen die Betätigungsvorrichtung an einem solchen beispielsweise stationär aufgestellten Steuerpult vorgesehen sind. Von diesen Seilsägesystemen mit Stehpult wendet sich die Erfindung gerade ab, indem im Kontext der vorliegenden Erfindung die Betätigungsvorrichtung zur Straffung des Sägeseils gerade nicht an dem stationär aufgestellten Steuerpult vorgesehen ist. Dies kann beispielsweise dadurch erreicht werden, dass die vorgeschlagene Betätigungsvorrichtung an einer Antriebs- und Speichereinheit der Seilsäge angeordnet vorliegt oder nur Bestandteil einer Fernbedienungsvorrichtung ist. Die für die Seilsäge eingeführten Begriffe, Definitionen und technischen Vorteile gelten für das vorgeschlagene System analog. Bei der Seilsäge, die Bestandteil des vorgeschlagenen Systems ist, handelt es sich vorzugsweise um eine andere Seilsäge als bei der vorgeschlagenen Seilsäge. Während die vorgeschlagene Seilsäge vorzugsweise der ersten Ausgestaltung der Erfindung entspricht, handelt es sich bei der Seilsäge des vorgeschlagenen Systems um eine Seilsäge, die der zweiten bevorzugten Ausgestaltung der Erfindung entspricht.

Es ist im Sinne der Erfindung bevorzugt, dass zwischen der Seilsäge und der Fernbedienungsvorrichtung eine Kommunikationsverbindung besteht. Insbesondere kann die Kommunikationsverbindung drahtlos ausgebildet sein.

Es ist im Sinne der Erfindung bevorzugt, dass die Fernbedienungsvorrichtung von einem Nutzer des Systems getragen werden kann. Mit anderen Worten kann es sich vorteilhafterweise um eine tragbare Fernbedienungsvorrichtung handeln. Es ist beispielsweise auch möglich, dass die Betätigungsvorrichtung elektronisch ausgebildet und in eine Applikationssoftware («App») integriert ist, wobei die Applikationssoftware von einer mobilen Kommunikationsvorrichtung ausgeführt werden kann. Dadurch kann ein allseits weit verbreitetes elektronisches Gerät, wie eine mobile Kommunikationsvorrichtung, als Fernbedienungsvorrichtung für eine Seilsäge verwendet werden.

In einem weiteren Aspekt betrifft die Erfindung ein Verfahren zur Straffung eines Sägeseils in einer Seilsäge. Die für die Seilsäge bzw. das System eingeführten Begriffe, Definitionen und technischen Vorteile gelten für das vorgeschlagene Verfahren analog. Das Verfahren ist durch folgende Schritte gekennzeichnet:
a) Bereitstellung einer vorgeschlagenen Seilsäge ODER Bereitstellung eines vorgeschlagenen Systems,
b) Einlegen des Sägeseils in einen Seilspeicher der Seilsäge
c) Betätigen einer Betätigungsvorrichtung zur Straffung des Sägeseils, wodurch das Sägeseil gestrafft wird.

Ein wesentlicher Vorteil des vorgeschlagenen Verfahrens besteht darin, dass das Verfahren von nur einem Nutzer durchgeführt werden kann. Das bedeutet, dass für die Durchführung des vorgeschlagenen Verfahrens nur eine Person erforderlich ist, wobei diese eine Person bevorzugt gleichzeitig manuell das Sägeseil innerhalb des Seilspeichers der Seilsäge spannt und die Betätigungsvorrichtung betätigt, wodurch das Sägeseil weiter gestrafft wird. Vorzugsweise liegt die Betätigungsvorrichtung für die Straffung des Sägeseils an einer Antriebs- und Speichereinheit der Seilsäge angeordnet vor oder sie ist Bestandteil einer Fernbedienungsvorrichtung. Die Betätigungsvorrichtung für die Straffung des Sägeseils liegt insbesondere nicht an einem stationär ausgestellten Stehpult vor, mit dem zusammen die Seilsäge betrieben werden kann.

In noch einem weiteren Aspekt betrifft die Erfindung eine Verwendung einer Betätigungsvorrichtung zur Straffung eines Sägeseils in einer Seilsäge, wobei die Betätigungsvorrichtung an einer Antriebs- und Speichereinheit der Seilsäge angeordnet vorliegt oder Bestandteil einer Fernbedienungsvorrichtung ist.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten Ausgestaltung der vorgeschlagenen Seilsäge
- Fig. 2: Ansicht einer bevorzugten Ausgestaltung des vorgeschlagenen Systems

### Ausführungsbeispiele und Figurenbeschreibung:

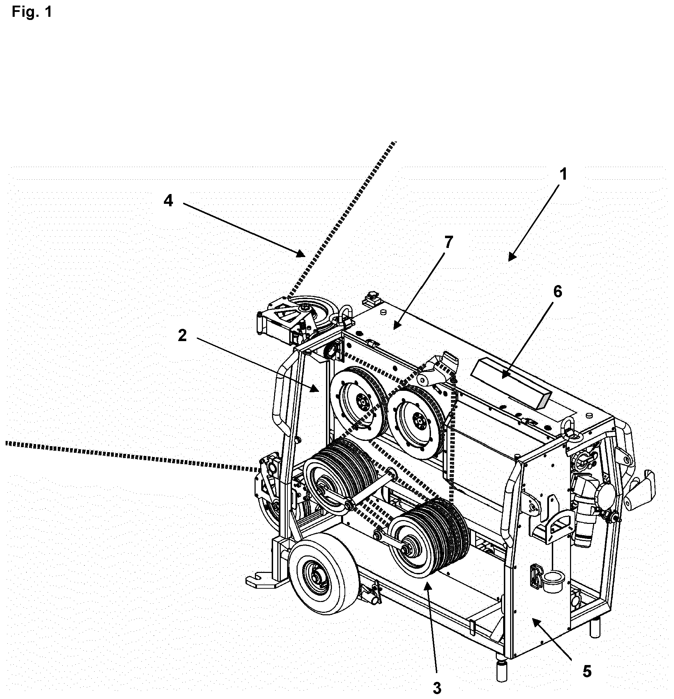

Figur 1 zeigt eine bevorzugte Ausgestaltung der vorgeschlagenen Seilsäge.1. Die Seilsäge 1 umfasst einen Seilantrieb 2 und einen Seilspeicher 3, wobei der Seilspeicher 3 Rollen und/oder Umlenkrollen umfassen kann. Der Seilantrieb 2 und der Seilspeicher 3 liegen vorzugsweise an einer Antriebs- und Speichereinheit 5 der Seilsäge 1 angeordnet vor, wobei die Antriebs- und Speichereinheit 5 vorzugsweise den Hauptkörper der Seilsäge 1 bildet. Der Seilspeicher 3 ist dazu eingerichtet, das Sägeseil 4 der Seilsäge 1 aufzunehmen und zu speichern. Mit dem Seilantrieb 2 kann das Sägeseil 4 angetrieben werden. Der Seilspeicher 3 bzw. die Antriebs- und Speichereinheit 5 kann eine Abdeckung 7 aufweisen, die im Sinne der Erfindung bevorzugt auch als Seilspeicher-Abdeckung 7 bezeichnet wird. Die Seilsäge 1 weist eine Betätigungsvorrichtung 6 zur Straffung des Sägeseils 4 auf, wobei diese Betätigungsvorrichtung 6 in dem in Fig. 1 dargestellten Ausführungsbeispiel der Erfindung an der Antriebs- und Speichereinheit 5 der Seilsäge 1 angeordnet vorliegt. Selbstverständlich ist die Betätigungsvorrichtung 6 so angeordnet, dass der Bediener, während er das Seil 4 von Hand strafft, die Betätigungsvorrichtung 6 erreichen kann. Darüber hinaus sind unterschiedliche Ausgestaltungsformen der Betätigungsvorrichtung 6 denkbar.

Die Betätigungsvorrichtung 6 kann im Kontext der Erfindung an der Antriebs- und Speichereinheit 5 der Seilsäge 1 angeordnet vorliegen. Durch diese Anordnung kann die Seilspannung auch bei inaktiver Funkstrecke aktiviert werden. Diese technische Wirkung der Anordnung der Betätigungsvorrichtung an der Antriebs- und Speichereinheit 5 der Seilsäge 1 hat sich als wesentlicher Vorteil der Erfindung herausgestellt, da beispielsweise ein unbeabsichtigtes Einschalten des Seilantriebs, sowie ein unbeabsichtigter Wiederanlauf der Säge besonders wirksam verhindert werden kann.

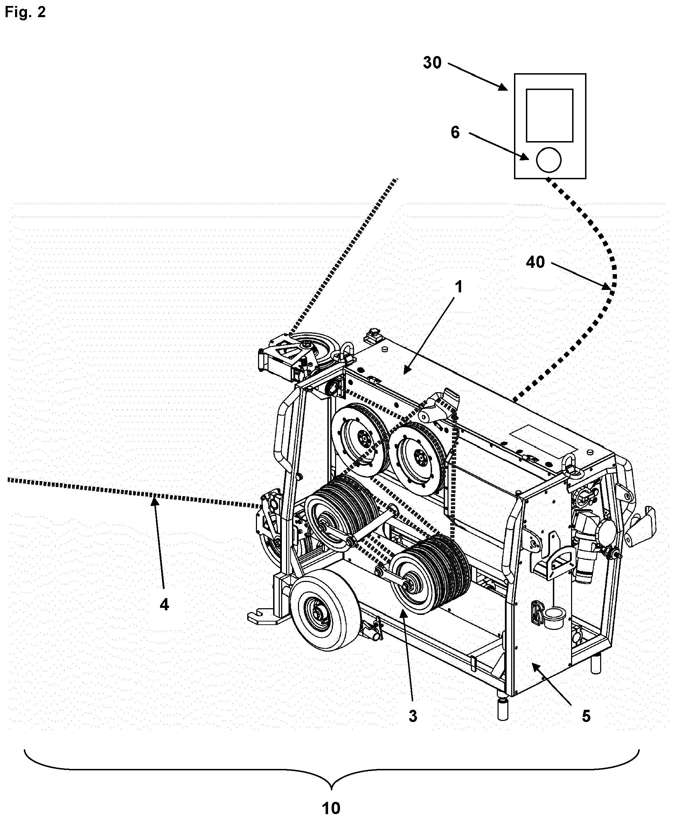

Figur 2 zeigt eine bevorzugte Ausgestaltung des vorgeschlagenen Systems 10. Das System 10 umfasst eine Seilsäge 1 und Fernbedienungsvorrichtung 30, wobei die Betätigungsvorrichtung 6 in dem in Fig. 2 dargestellten Ausführungsbeispiel der Erfindung Bestandteil der Fernbedienungsvorrichtung 30 ist. Es ist im Sinne der Erfindung bevorzugt, dass zwischen der Fernbedienungsvorrichtung 30 und der Seilsäge 1, insbesondere ihrer Antriebs- und Speichereinheit 5, eine Kommunikationsverbindung 40 besteht. Diese Kommunikationsverbindung 40 ist vorzugsweise drahtlos ausgebildet. Die Betätigungsvorrichtung 6 ist in der in Fig. 2 abgebildeten Ausgestaltung der Erfindung insbesondere nicht Bestandteil eines stationär aufgestellten Stehpultes (nicht dargestellt)

In dem in Fig. 2 abgebildeten Ausführungsbeispiel der Erfindung weist die Antriebs- und Speichereinheit 5 keine Betätigungsvorrichtung 6 auf, sondern die Betätigungsvorrichtung 6 liegt an einer Fernbedienung 30 angeordnet vor. Es ist im Sinne der Erfindung bevorzugt, dass eine Spannung des Sägeseils 4 über die Betätigungsvorrichtung 6 an der Fernbedienungsvorrichtung 30 eingestellt bzw. hergestellt wird. Vorzugsweise liegt in dieser Ausgestaltung der Erfindung eine aktivierte Funkstrecke vor, so dass beispielsweise auch andere Funktionen der Seilsäge 1 ausgelöst werden können. Um beim Belegen des Seilspeichers 3 ein unbeabsichtigtes Einschalten der Seilsäge 1 zu vermeiden, ist es im Sinne der Erfindung bevorzugt, dass ein Steuerprogramm der Seilsäge 1 erhöhte Sicherheitsstandards erfüllt. Dadurch kann insbesondere ein unerwünschtes selbständiges Anlaufen der Seilsäge 1 effektiv vermieden werden. Das Steuerprogramm der Seilsäge 1 kann beispielsweise als Computerprogramm-Produkt realisiert sein und auf der Antriebs- und Speichereinheit 5 der Seilsäge 1 betrieben werden.

Es ist im Sinne der Erfindung bevorzugt, dass die Seilsäge 1 mit der Fernbedienungsvorrichtung 30 gesteuert werden kann, indem auf der Fernbedienung 30 Eingaben vorgenommen werden, die eine Wirkung auf die Seilsäge 1 haben. Es ist im Sinne der Erfindung ganz besonders bevorzugt, dass die Fernbedienung 30 eine Betätigungsvorrichtung 6 aufweist, mit der das Sägeseil 4 der Seilsäge 1 gestrafft werden kann. Die Vorgänge innerhalb der Seilsäge 1, die zu einer Straffung oder weniger starken Straffung des Sägeseils 4 führen, sind für die verschiedenen Ausführungsformen im Wesentlichen dieselben.

Vorzugsweise besteht insbesondere beim Belegen des Seilspeichers 3 zwischen der Seilsäge 1 und der Fernbedienungsvorrichtung 30 eine Kommunikationsverbindung 40.

### Bezugszeichenliste

- 1: Seilsäge
- 2: Seilantrieb
- 3: Seilspeicher
- 4: Sägeseil
- 5: Antriebs- und Speichereinheit der Seilsäge
- 6: Betätigungsvorrichtung
- 7: Abdeckung für den Seilspeicher
- 10: System
- 30: Fernbedienungsvorrichtung
- 40: Kommunikationsverbindung

## Patentansprüche

1. Seilsäge (1) mit einem Seilantrieb (2) und einem Seilspeicher (3) für ein Sägeseil (4), wobei der Seilantrieb (2) und der Seilspeicher (3) eine Antriebs- und Speichereinheit (5) der Seilsäge (1) bilden,
**dadurch gekennzeichnet, dass**
eine Betätigungsvorrichtung (6) zur Straffung des Sägeseils (4) an der Antriebs- und Speichereinheit (5) der Seilsäge (1) angeordnet vorliegt.

2. Seilsäge (1) nach Anspruch 1
**dadurch gekennzeichnet, dass**
die Betätigungsvorrichtung (6) dazu vorgesehen ist, eine Spannung des Sägeseils (4) einzustellen.

3. Seilsäge (1) nach Anspruch 1 oder 2
**dadurch gekennzeichnet, dass**
die Seilsäge (1) eine Abdeckung (7) für den Seilspeicher (3) aufweist, wobei bei Öffnen der Abdeckung (7) eine niedrige Seilspannung einstellbar ist.

4. Seilsäge (1) nach einem der vorhergehenden Ansprüche
**dadurch gekennzeichnet, dass**
bei Schließen einer Abdeckung (7) eine hohe Seilspannung einstellbar ist.

5. System (10) umfassend eine Seilsäge (1') und eine Fernbedienungsvorrichtung (30)
**dadurch gekennzeichnet, dass**
eine Betätigungsvorrichtung (6) zur Straffung des Sägeseils (4) Bestandteil der Fernbedienungsvorrichtung (30) ist.

6. System (10) nach Anspruch 5
**dadurch gekennzeichnet, dass**
zwischen der Seilsäge (1') und der Fernbedienungsvorrichtung (30) eine Kommunikationsverbindung (40) besteht.

7. System (10) nach Anspruch 6
**dadurch gekennzeichnet, dass**
die Kommunikationsverbindung (40) drahtlos ausgebildet ist.

8. System (10) nach einem der Ansprüche 5 bis 7
**dadurch gekennzeichnet, dass**
die Fernbedienungsvorrichtung (30) von einem Nutzer des Systems (10) getragen werden kann.

9. Verfahren zur Straffung eines Sägeseils (4) in einer Seilsäge (1)
**gekennzeichnet durch die folgenden Verfahrensschritte:**
a) Bereitstellung einer Seilsäge (1) nach einem der Ansprüche 1 bis 4 ODER Bereitstellung eines Systems (10) nach einem der Ansprüche 5 bis 8,
b) Einlegen des Sägeseils (4) in einen Seilspeicher (3) der Seilsäge (1),
c) Betätigen einer Betätigungsvorrichtung (6) zur Straffung des Sägeseils (4), wodurch das Sägeseil (4) gestrafft wird.

10. Verfahren nach Anspruch 9
**dadurch gekennzeichnet, dass**
die Betätigungsvorrichtung (6) an einer Antriebs- und Speichereinheit (5) der Seilsäge (1) angeordnet vorliegt oder Bestandteil einer Fernbedienungsvorrichtung (30) ist.

11. Verfahren nach Anspruch 9 oder 10
**dadurch gekennzeichnet, dass**
das Verfahren von nur einem Nutzer durchgeführt wird.

12. Verwendung einer Betätigungsvorrichtung (6) zur Straffung eines Sägeseils (4) in einer Seilsäge (1), wobei die Betätigungsvorrichtung (6) an einer Antriebs- und Speichereinheit (5) der Seilsäge (1) angeordnet vorliegt oder Bestandteil einer Fernbedienungsvorrichtung (30) ist.
